# EUROPÄISCHE PATENTSCHRIFT

(11) **EP 3 299 682 B1**
(45) Veröffentlichungstag und Bekanntmachung des Hinweises auf die Patenterteilung: **15.04.2020**
(21) Anmeldenummer: 17190770.2
(22) Anmeldetag: 13.09.2017
(51) Int. Cl.: F16J 15/3208, F16J 15/3212

(54) **DICHTRING UND DESSEN VERWENDUNG**
SEAL RING AND ITS USE
JOINT D'ÉTANCHÉITÉ ET SON UTILISATION

(30) Priorität: 22.09.2016 DE 102016011448
(43) Veröffentlichungstag der Anmeldung: 28.03.2018
(73) Patentinhaber: Carl Freudenberg KG, 69469 Weinheim (DE)
(72) Erfinder: Müller-Niehuus, Kristian, 60438 Frankfurt (DE); Günther, Hans-Werner, 31623 Drakenburg (DE); Schönberg, Frank, 68623 Lampertheim (DE)

(56) Entgegenhaltungen:
- FR-A- 1 132 266
- US-A- 2 630 343
- US-A- 3 901 517

## Beschreibung

### Technisches Gebiet

Die Erfindung betrifft einen Dichtring und dessen Verwendung, wobei der Dichtring, im Querschnitt betrachtet, 7-förmig ausgebildet ist, umfassend einen ersten Axialschenkel und einen Dichtschenkel mit einer Dichtlippe, wobei der Dichtschenkel mittels eines Gelenks mit einer ersten Stirnseite des Axialschenkels verbunden ist und ein Spannelement zur Stabilisierung des Dichtschenkels in radialer Richtung, wobei das Spannelement ringförmig ausgebildet ist und, im Querschnitt betrachtet, durch eine 7-förmig ausgebildete Feder gebildet ist und einen zweiten Axialschenkel und einen Stabilisierungsschenkel aufweist, wobei der zweite Axialschenkel mit dem ersten Axialschenkel und der Stabilisierungsschenkel mit dem Dichtschenkel verbunden ist und wobei der erste Axialschenkel auf seiner dem Dichtschenkel radial zugewandten Seite einen Hinterschnitt aufweist, der sich in axialer Richtung von einer zweiten Stirnseite des ersten Axialschenkels in Richtung der ersten Stirnseite und des Gelenks erstreckt.

### Stand der Technik

Ein solcher Dichtring ist aus der US 2 630 343 A und der US 3 901 517 A jeweils bekannt.

Der Dichtring aus der US 2 630 343 A umfasst einen Axialschenkel, der auf seiner dem Dichtschenkel radial zugewandten Seite zylindrisch ausgebildet ist und sich von der offenen Stirnseite des Dichtrings bis zu einem Gelenk erstreckt, das den Axialschenkel und den Dichtschenkel gelenkig miteinander verbindet.
Das Spannelement ist 7-förmig ausgebildet und im Einbauraum angeordnet, der von den einander zugewandten Seiten von Axialschenkel und Dichtschenkel begrenzt ist.

Der Dichtring aus der US 3 901 517 A ist als Nutring zur Abdichtung translatorisch hin- und herbeweglicher Maschinenelemente ausgebildet, wobei der Dichtring, im Querschnitt betrachtet, C-förmig ausgebildet ist und einen radial innen und einen radial außen angeordneten Dichtschenkel aufweist, von denen einer dynamisch und einer statisch dichtend ausgebildet ist.
Das Spannelement ist ebenfalls, im Querschnitt betrachtet, C-förmig ausgebildet und sorgt für eine Aufspreizung der Dichtschenkel relativ zueinander in radialer Richtung.
Die Hinterschnitte der beiden zuvor beschriebenen Dichtringe sind stufenförmig ausgeführt und werden dadurch gebildet, dass die Stirnseite des zweiten Axialschenkels der Feder vom Dichtungswerkstoff des ersten Axialschenkels überdeckt ist.
Der Innenumfang des zweiten Axialschenkels ist zur Umgebung hin offen, also nicht vom Dichtungswerkstoff des ersten Axialschenkels überdeckt. Gleiches gilt auch für den Stabilisierungsschenkel der Feder.
Die einander zugewandten Seiten der Feder liegen also offen im Dichtring.
Aus der FR 1 132 266 A ist ein Dichtring bekannt, dessen Dichtlippe in radialer Richtung außen des Dichtrings angeordnet ist. Demzufolge ist der Axialschenkel in radialer Richtung innen des Dichtrings angeordnet und hat eine dem Dichtschenkel radial zugewandte Seite, deren Durchmesser sich in axialer Richtung von der offenen Stirnseite des vorbekannten Dichtrings in Richtung der ersten Stirnseite und des Gelenks kontinuierlich vergrößert.
Der Dichtschenkel hat auf der der offenen Stirnseite axial abgewandten Seite und auf der dem ersten Axialschenkel radial zugewandten Innenseite einen als Freistich ausgebildeten Hinterschnitt, derart, dass die Position des Gelenks, in radialer Richtung betrachtet, in Richtung der Dichtlippe verlagert ist.

Ein weiterer Dichtring ist aus der EP 2 988 035 A1 bekannt.
Der vorbekannte Dichtring gelangt zu Abdichtung von Schmierfett zur Anwendung und umfasst ein Spannelement, das in einer Einbaunut des Dichtrings angeordnet ist. Die Einbaunut ist auf der der Dichtlippe radial abgewandten Seite des Dichtschenkels angeordnet, wobei die Einbaunut auf der der Dichtlippe radial abgewandten Seite eine Einbauöffnung für das Spannelement aufweist, die von zwei in axialer Richtung mit Abstand benachbart zueinander angeordneten Führungsstegen begrenzt ist. Das Gelenk ist, in radialer Richtung betrachtet und im herstellungsbedingten Zustand des Dichtrings, mittig des Dichtrings angeordnet. Ebenfalls in radialer Richtung mittig des Dichtrings, ist im Bereich des Gelenks ein in axialer Richtung einseitig offener, im Wesentlichen C-förmig ausgebildeter Gelenkraum angeordnet. Dieser Gelenkraum ist derart ausgebildet, dass darin befindliches, abzudichtendes Medium aus diesem abgeleitet wird. Dadurch, dass sich kein abzudichtendes Medium innerhalb des Gelenkraums hält, wird eine unerwünschte Verhärtung des Dichtrings verhindert, und der Dichtschenkel vermag hohen dynamischen Auslenkbewegungen eines abzudichtenden Maschinenelements zu folgen, ohne dass sich die Anpresskräfte, mit denen die Dichtlippe das abzudichtende Maschinenelement dichtend berührt, nennenswert verändern.

Aus der DE 10 2009 053 558 A1 ist ein Dichtring bekannt, der 7-förmig ausgebildet ist und einen in radialer Richtung vergleichsweise dicken ersten Axialschenkel und einen Dichtschenkel mit einer Dichtlippe umfasst, wobei der Dichtschenkel mittels eines Gelenks mit einer ersten Stirnseite des Axialschenkels verbunden ist. Ein separat erzeugtes Spannelement zur Stabilisierung des Dichtschenkels in radialer Richtung ist demgegenüber nicht vorgesehen. Das Gelenk ist, in radialer Richtung betrachtet und im herstellungsbedingten Zustand des Dichtrings, mittig des Dichtrings angeordnet. Die beiden Stirnseiten des Axialschenkels sind mit Erhebungen ausgebildet und mittels dieser Erhebungen in einem Einbauraum einer Dichtungsanordnung abgestützt, wobei durch die Erhebungen eine Verdrehung/ Verkippung des Dichtrings im Einbauraum während seiner bestimmungsgemäßen Verwendung verhindert wird. Die Erhebungen können als umfangsseitig umlaufende, in sich geschlossene Wülste ausgebildet sein, durch die sich eine besonders gute Klemmwirkung des Axialschenkels im Einbauraum ergibt.

### Darstellung der Erfindung

Der Erfindung liegt die Aufgabe zu Grunde, einen Dichtring der eingangs genannten Art derart weiterzuentwickeln, dass er im Wesentlichen unabhängig vom abzudichtenden Durchmesser verbesserte Gebrauchseigenschaften während einer längeren Gebrauchsdauer aufweist, insbesondere dass die Dichtlippe unabhängig von der Einbausituation des Dichtrings, also unabhängig davon, ob die Dichtlippe radial innen oder radial außen des Dichtrings angeordnet ist, eine abzudichtende Oberfläche eines abzudichtenden Maschinenelements mit gleichbleibender radialer Vorspannung während einer langen Gebrauchsdauer dichtend berührt und dass die Positionierung der Feder im Dichtring besonders zuverlässig und dauerhaltbar ist.
Außerdem sollen Verwendungen gefunden werden, für die sich der erfindungsgemäße Dichtring besonders eignet.

Diese Aufgabe wird erfindungsgemäß mit den Merkmalen der Ansprüche 1 und 9 gelöst. Auf vorteilhafte Ausgestaltungen des Dichtrings nehmen die auf Anspruch 1 direkt oder indirekt rückbezogenen Ansprüche Bezug.

Zur Lösung der Aufgabe ist es vorgesehen, dass der zweite Axialschenkel vom ersten Axialschenkel und der Stabilierungsschenkel vom Dichtschenkel zumindest im Wesentlichen umschlossen ist.
Das Spannelement, das eine Form aufweist, die der Form des gesamten Dichtrings entspricht, nämlich 7-förmig ausgebildet ist, bewirkt die vorteilhaften Gebrauchseigenschaften des Dichtrings unabhängig davon, ob der Dichtschenkel mit seiner Dichtlippe radial innen des Dichtrings oder radial außen des Dichtrings angeordnet ist.
Das Spannelement kann im Wesentlichen gleichschenklig ausgebildet sein.

Der Dichtring aus der eingangs genannten EP 2 988 035 A1 ist hauptsächlich für radial innendichtende Systeme vorgesehen. Der Dichtschenkel und die Dichtlippe sind radial innen des Dichtrings angeordnet, wobei die Dichtlippe eine abzudichtende Oberfläche eines abzudichtenden Maschinenelements, beispielsweise einer Welle, unter radialer Vorspannung dichtend umschließt.

Für radial außendichtende Systeme, wenn der Axialschenkel radial innenseitig angeordnet ist und sich der Dichtschenkel mit seiner Dichtlippe, ausgehend vom Axialschenkel radial nach außen erstreckt, sind als Spannelemente ausgebildete Ringwendelfedern von Nachteil. Ringwendelfedern werden aktuell als Zugfedern für innendichtende Systeme verwendet. Bei außendichtenden Systemen müsste eine solche Feder als Druckfeder ausgeführt sein. Dies ist prinzipiell möglich, erschwert jedoch häufig die Montage und eine zuverlässige Positionierung im Einbauraum der Feder. Die Gefahr des Herausspringens aus dem Einbauraum im Vergleich zu einer Zugfeder ist weitaus höher.

Bei dem erfindungsgemäßen Dichtring wird als Spannelement demgegenüber eine 7-förmig ausgebildete Feder verwendet, deren Gestalt an die Gestalt des Dichtrings angepasst ist. Ein solcher Dichtring hat den Vorteil, dass er auch gut in außendichtenden Systemen zur Anwendung gelangen kann, bei denen sich also der Dichtschenkel mit der Dichtlippe radial nach außen erstreckt und zum Beispiel eine eine Gehäusebohrung begrenzende Wandung dichtend berührt.

Die Gebrauchseigenschaften des erfindungsgemäßen Dichtrings sind stets gleichbleibend gut, unabhängig davon, ob die Dichtlippe radial innenseitig oder radial außenseitig des Dichtrings angeordnet ist. Durch die zuvor beschriebene Gestalt der Feder kommt die radiale Federkraft aus der radialen Bewegung der Feder. Dabei ist es für den Gebrauch unerheblich, ob es sich um ein außen-oder ein innendichtendes System handelt. Die Anpressung der Dichtlippe an eine abzudichtende Oberfläche erfolgt aufgrund der Biegung der Feder und ist damit durchmesserunabhängig umsetzbar.

Durch die 7-förmig ausgebildete Feder können vergleichsweise große radiale Auslenkbewegungen des abzudichtenden Maschinenelements gut ausgeglichen werden, ohne dass sich die Anpresskraft, mit der die Dichtlippe die abzudichtende Oberfläche dichtend berührt, nennenswert verändert.

Außerdem ist von Vorteil, dass die 7-förmig ausgebildete Feder einfach und kostengünstig herstellbar ist. Auch die Integration einer solchen Feder in einen Dichtring ist problemlos.

Der erste Axialschenkel weist auf seiner dem Dichtschenkel radial zugewandten Seite einen Hinterschnitt auf, der sich in axialer Richtung von einer zweiten Stirnseite des ersten Axialschenkels in Richtung der ersten Stirnseite und des Gelenks erstreckt. Generell hat es sich als vorteilhaft bezüglich der Gebrauchseigenschaften, insbesondere bezüglich der Gebrauchseigenschaften des Dichtrings in radial außendichtenden Systemen, herausgestellt, wenn das Gelenk zwischen erstem Axialschenkel und Dichtschenkel in radialer Richtung möglichst weit von der Dichtlippe entfernt angeordnet ist. Dadurch vermag der Dichtschenkel radialen Auslenkbewegungen eines abzudichtenden Maschinenelements auch dann besonders gut zu folgen, wenn diese Auslenkbewegungen in radialer Richtung vergleichsweise groß sind. Die Größe der radialen Auslenkbewegungen ist abhängig vom abzudichtenden Durchmesser. Die abzudichtenden Durchmesser bei Windkraftanlagen können zum Beispiel 4 m betragen, die abzudichtenden Durchmesser bei Tunnelbohrmaschinen zum Beispiel 18 m. Durch das in radialer Richtung von der Dichtlippe möglichst weit entfernt angeordnete Gelenk und die daraus resultierende gute elastische Nachgiebigkeit des Dichtschenkels, berührt die Dichtlippe die abzudichtende Oberfläche auch in einem solchen Fall mit einer gleichbleibend guten Anpressung und dadurch Dichtwirkung über dem gesamten Umfang.

Der zweite Axialschenkel ist vom ersten Axialschenkel und der Stabilisierungsschenkel vom Dichtschenkel zumindest im Wesentlichen umschlossen. Hierbei ist von Vorteil, dass die Positionierung der Feder im Dichtring besonders zuverlässig und dauerhaltbar ist. Der Dichtring erscheint dabei trotz Verwendung der Feder praktisch einteilig, und der Montageaufwand des Dichtrings ist dadurch gering. Auch die Gefahr von Montagefehlern ist auf ein Minimum begrenzt.

Nach einer vorteilhaften Ausgestaltung ist die Feder vom Dichtungswerkstoff des ersten Axialschenkels und des Dichtschenkels vollständig umschlossen. Die Feder ist dadurch vor äußeren Einflüssen gut geschützt.

Begünstigt werden die zuvor beschriebenen, vorteilhaften Gebrauchseigenschaften des Dichtrings dadurch, dass das Gelenk, in radialer Richtung betrachtet und im herstellungsbedingten Zustand des Dichtrings, im weitesten von der Dichtlippe abgewandten Drittel des Dichtrings angeordnet ist. Die Ausgleichsfähigkeit bei hohen Exzentrizitäten und großen abzudichtenden Durchmessern ist bei Dichtringen, bei denen das Gelenk, in radialer Richtung betrachtet und im herstellungsbedingten Zustand des Dichtrings, ungefähr mittig des Dichtrings angeordnet ist, im Vergleich zu der zuvor beschriebenen Ausgestaltung deutlich geringer.

Die Dichtlippe kann in radialer Richtung innen oder außen des Dichtrings angeordnet sein. Überraschend hat sich gezeigt, dass der Dichtring unabhängig davon, ob die Dichtlippe radial innen oder radial außen des Dichtrings angeordnet ist, gleichbleibend gute Gebrauchseigenschaften aufweist. Radial außen angeordnete abzudichtende Oberflächen lassen sich durch den Dichtring mit der gleichen Zuverlässigkeit abdichten, wie radial innen angeordnete abzudichtende Oberflächen.

Gemäß einer vorteilhaften Ausgestaltung kann es vorgesehen sein, dass der zweite Axialschenkel im ersten Axialschenkel und der Stabilisierungsschenkel im Dichtschenkel eingebettet ist. Hierbei ist von Vorteil, dass die Feder einen integralen Bestandteil des Dichtrings bildet. Ein unerwünschter Verlust der Feder, sowohl bei der Lagerung des Dichtrings vor dessen Verwendung als auch während der bestimmungsgemäßen Verwendung im eingebauten Zustand, kann dadurch zuverlässig vermieden werden.

Innerhalb des Dichtrings ist die Feder bevorzugt auf den einander zugewandten Seiten von erstem Axialschenkel und Dichtschenkel angeordnet. Hierbei ist von Vorteil, dass die Feder den im Wesentlichen C-förmig ausgebildeten Gelenkraum des Dichtrings im Wesentlichen unmittelbar begrenzt. Die Gebrauchseigenschaften des Dichtrings, insbesondere die Schwenkbeweglichkeit des Dichtschenkels mit der Dichtlippe um das Gelenk, hängt im Wesentlichen von den Gebrauchseigenschaften der Feder ab. Auch bei größeren radialen Auslenkbewegungen eines abzudichtenden Maschinenelements und entsprechenden Schwenkbewegungen des Dichtschenkels mit der Dichtlippe um das Gelenk, tritt keine unerwünschte Verhärtung des Dichtrings durch den Dichtungswerkstoff ein, der im spitzen Winkel der Feder angeordnet ist und bei Schwenkbewegungen des Dichtschenkels um das Gelenk unerwünscht gestaucht werden und die Gebrauchseigenschaften des Dichtrings dadurch nachteilig verändern könnte.

Die Feder kann aus einem Federstahl bestehen. Hierbei ist von Vorteil, dass die Feder auch während einer langen Gebrauchsdauer des Dichtrings nicht relaxiert und der Dichtring dadurch gleichbleibend gute Gebrauchseigenschaften während einer langen Gebrauchsdauer aufweist. Andere Werkstoffe, die für die Feder zur Anwendung gelangen können, können zum Beispiel polymere Werkstoffe sein, die ausreichend gute elastische Gebrauchseigenschaften aufweisen.

Der erste Axialschenkel und der Dichtschenkel, weiter bevorzugt der erste Axialschenkel, der Dichtschenkel und das Gelenk, können einstückig ineinander übergehend und materialeinheitlich ausgebildet sein und aus einem Dichtungswerkstoff bestehen. Durch den einfachen und teilarmen Aufbau ist der Dichtring einfach und kostengünstig herstellbar. Der Dichtungswerkstoff kann ein Elastomer sein oder ein Polyurethan, wobei der Dichtungswerkstoff bevorzugt eine Härte Shore A von 60 bis 98 aufweist. Durch solche Werkstoffe wird eine gute Dichtwirkung während einer langen Gebrauchsdauer erreicht.

Der zuvor beschriebene Dichtring kann in Tunnelbohrmaschinen, Windkraftanlagen oder anderen Radialanwendungen verwendet werden.

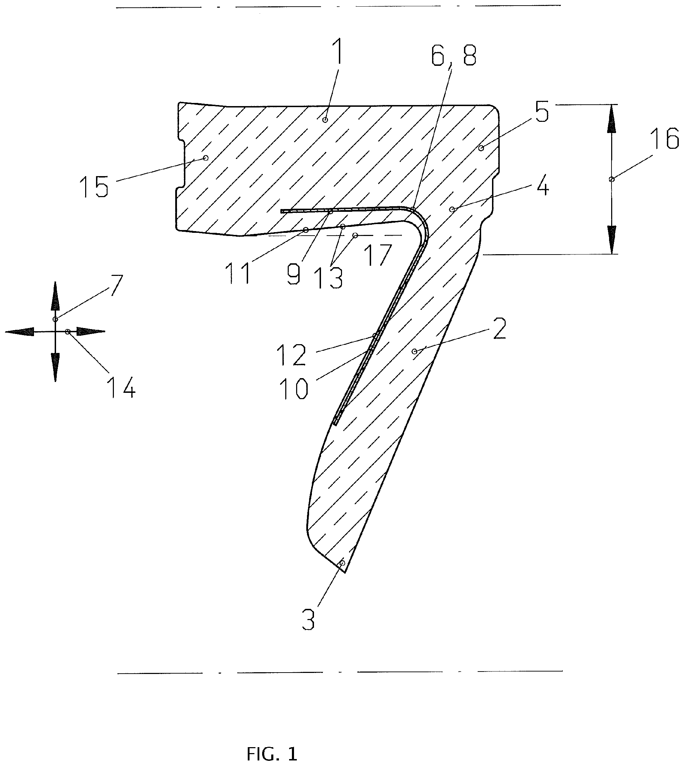

### Kurzbeschreibung der Zeichnung

Ein Ausführungsbeispiel des erfindungsgemäßen Dichtrings wird nachfolgen anhand der Figur näher erläutert.

In der Figur ist ein Ausführungsbeispiel des erfindungsgemäßen Dichtrings in schematischer Darstellung gezeigt.

### Ausführung der Erfindung

Der in der Figur gezeigte Dichtring ist 7-förmig ausgebildet und weist als Spannelement 6 eine ebenfalls 7-förmig ausgebildete Feder 8 auf, die einen integralen Bestandteil des Dichtrings bildet und vom Dichtungswerkstoff des Dichtrings vollständig umschlossen ist.

Der Dichtring umfasst den ersten Axialschenkel 1 und den Dichtschenkel 2 mit der Dichtlippe 3, wobei, je nach Anwendungsfall, der Dichtschenkel 2 und die Dichtlippe 3 radial innen oder radial außen des Dichtrings angeordnet sind. Schematisch dargestellt ist das durch die beiden Symmetrieachsen, radial der Dichtlippe 3 oder radial dem ersten Axialschenkel 1 benachbart.
Der Dichtschenkel 2 ist mittels des Gelenks 4 an der ersten Stirnseite 5 des Axialschenkels 1 angelenkt, wobei das Gelenk 4 von der Dichtlippe 3 in radialer Richtung 7 möglichst weit entfernt angeordnet ist, um auch große Exzentrizitäten eines hier nicht dargestellten Maschinenelements ausgleichen zu können. Diese großen Exzentrizitäten treten hauptsächlich dann auf, wenn der abzudichtende Durchmesser groß ist, zum Beispiel etwa 2 m oder mehr beträgt.
Das Gelenk 4 ist einstückig ineinander übergehend und materialeinheitlich mit dem Axialschenkel 1 und dem Dichtschenkel 2 ausgebildet. In radialer Richtung 7 betrachtet und im herstellungsbedingten Zustand des Dichtrings, ist das Gelenk 4 im weitesten von der Dichtlippe 3 abgewandten Drittel 16 des Dichtrings angeordnet. Zur noch weiteren Verbesserung der Schwenkbeweglichkeit des Dichtschenkels 2 relativ zum ersten Axialschenkel 1 um das Gelenk 4 herum ist es vorgesehen, dass der erste Axialschenkel 1 auf seiner dem Dichtschenkel 2 radial zugewandten Seite 11 den Hinterschnitt 13 aufweist, der sich in axialer Richtung 14 von der zweiten Stirnseite 15 des ersten Axialschenkels 1 zur ersten Stirnseite 5 und zum Gelenk 4 erstreckt.

Die Feder 8 begrenzt einen C-förmig ausgebildeten Gelenkraum 17, der durch die einander zugewandten Seiten 11, 12 von erstem Axialschenkel 1 und Dichtschenkel 2 begrenzt ist. Die Feder 8 ist praktisch unmittelbar angrenzend zu diesem Gelenkraum 17 angeordnet, im Wesentlichen direkt unter der Oberfläche von erstem Axialschenkel 1 und Dichtschenkel 2. Der zweite Axialschenkel 9 der Feder 8 erstreckt sich achsparallel zum ersten Axialschenkel 1 des Dichtrings, und der Stabilisierungsschenkel 10 der Feder 8 erstreckt sich im Wesentlichen parallel zum Dichtschenkel 2. Der Stabilisierungsschenkel 10 sorgt dafür, dass der Dichtschenkel 2 und damit die Dichtlippe 3 einem abzudichtenden Maschinenelement in Umfangsrichtung während einer langen Gebrauchsdauer mit stets gleichem Anpressdruck zugeordnet sind, wobei die Dichtlippe 3 eine Oberfläche eines abzudichtenden Maschinenelements dichtend berührt.

Das abzudichtende Maschinenelement kann, radial innendichtend, durch eine abzudichtende Welle oder, radial außendichtend, durch eine eine Gehäusebohrung begrenzende, abzudichtende Wandung gebildet sein.

Die Gebrauchseigenschaften des erfindungsgemäßen Dichtrings sind stets gleichbleibend gut, unabhängig davon, ob die Dichtlippe 3 radial innenseitig oder radial außenseitig des Dichtrings angeordnet ist. Durch die zuvor beschriebene 7-förmige Gestalt der Feder 8 kommt die radiale Federkraft aus der radialen Bewegung der Feder 8. Die Anpressung der Dichtlippe 3 an eine abzudichtende Oberfläche erfolgt aufgrund der Biegung der Feder 8 und ist damit durchmesserunabhängig.

Aufgrund der guten Gebrauchseigenschaften während einer langen Gebrauchsdauer, auch dann, wenn der Dichtring radial außendichtend ist, ist der erfindungsgemäße Dichtring besonders gut für die Verwendung in Tunnelbohrmaschinen oder Windkraftanlagen geeignet.

## Patentansprüche

1. Dichtring, der, im Querschnitt betrachtet, 7-förmig ausgebildet ist, umfassend einen ersten Axialschenkel (1) und einen Dichtschenkel (2) mit einer Dichtlippe (3), wobei der Dichtschenkel (2) mittels eines Gelenks (4) mit einer ersten Stirnseite (5) des Axialschenkels (1) verbunden ist und ein Spannelement (6) zur Stabilisierung des Dichtschenkels (2) in radialer Richtung (7), wobei das Spannelement (6) ringförmig ausgebildet und, im Querschnitt betrachtet, durch eine 7-förmig ausgebildete Feder (8) gebildet ist und einen zweiten Axialschenkel (9) und einen Stabilisierungsschenkel (10) aufweist, wobei der zweite Axialschenkel (9) mit dem ersten Axialschenkel (1) und der Stabilisierungsschenkel (10) mit dem Dichtschenkel (2) verbunden ist, und wobei der erste Axialschenkel (1) auf seiner dem Dichtschenkel (2) radial zugewandten Seite (11) einen Hinterschnitt (13) aufweist, der sich in axialer Richtung (14) von einer zweiten Stirnseite (15) des ersten Axialschenkels (1) in Richtung der ersten Stirnseite (5) und des Gelenks (4) erstreckt, **dadurch gekennzeichnet, dass** der zweite Axialschenkel (9) vom ersten Axialschenkel (1) und der Stabilisierungsschenkel (10) vom Dichtschenkel (2) zumindest im Wesentlichen umschlossen ist.

2. Dichtring nach Anspruch 1, **dadurch gekennzeichnet, dass** das Gelenk (4), in radialer Richtung (7) betrachtet und im herstellungsbedingten Zustand des Dichtrings, im weitesten von der Dichtlippe (3) abgewandten Drittel (16) des Dichtrings angeordnet ist.

3. Dichtring nach einem der Ansprüche 1 oder 2, **dadurch gekennzeichnet, dass** die Dichtlippe (3) in radialer Richtung (7) innen oder außen des Dichtrings angeordnet ist.

4. Dichtring nach einem der Ansprüche 1 bis 3, **dadurch gekennzeichnet, dass** der zweite Axialschenkel (9) im ersten Axialschenkel (1) und der Stabilisierungsschenkel (10) im Dichtschenkel (2) eingebettet ist.

5. Dichtring nach einem der Ansprüche 1 bis 4, **dadurch gekennzeichnet, dass** die Feder (8) auf den einander zugewandten Seiten (11, 12) von erstem Axialschenkel (1) und Dichtschenkel (2) angeordnet ist.

6. Dichtring nach einem der Ansprüche 1 bis 5, **dadurch gekennzeichnet, dass** die Feder (8) aus einem Federstahl besteht.

7. Dichtring nach einem der Ansprüche 1 bis 6, **dadurch gekennzeichnet, dass** der erste Axialschenkel (1) und der Dichtschenkel (2) einstückig ineinander übergehend und materialeinheitlich ausgebildet sind und aus einem Dichtungswerkstoff bestehen.

8. Dichtring nach einem der Ansprüche 1 bis 7, **dadurch gekennzeichnet, dass** der erste Axialschenkel (1), der Dichtschenkel (2) und das Gelenk (4) einstückig ineinander übergehend und materialeinheitlich ausgebildet sind und aus einem Dichtungswerkstoff bestehen.

9. Verwendung eines Dichtrings nach einem der Ansprüche 1 bis 8 in Tunnelbohrmaschinen oder Windkraftanlagen.

## Claims

1. Sealing ring which, as viewed in cross section, is designed in the shape of a 7, comprising a first axial limb (1) and a sealing limb (2) with a sealing lip (3), wherein the sealing limb (2) is connected by means of a joint (4) to a first end face (5) of the axial limb (1), and a tensioning element (6) for stabilizing the sealing limb (2) in the radial direction (7), wherein the tensioning element (6) is of an annular design and, as viewed in cross section, is formed by a spring (8) designed in the shape of a 7 and has a second axial limb (9) and a stabilizing limb (10), wherein the second axial limb (9) is connected to the first axial limb (1) and the stabilizing limb (10) is connected to the sealing limb (2), and wherein the first axial limb (1) has on its side (11) radially facing the sealing limb (2) an undercut (13), which extends in the axial direction (14) from a second end face (15) of the first axial limb (1) in the direction of the first end face (5) and of the joint (4), **characterized in that** the second axial limb (9) is at least substantially enclosed by the first axial limb (1) and the stabilizing limb (10) is at least substantially enclosed by the sealing limb (2).

2. Sealing ring according to Claim 1, **characterized in that** the joint (4), as viewed in the radial direction (7) and in the production-induced state of the sealing ring, is arranged in the third (16) of the sealing ring which is furthest away from the sealing lip (3).

3. Sealing ring according to either of Claims 1 and 2, **characterized in that** the sealing lip (3) is arranged on the inside or outside of the sealing ring in the radial direction (7).

4. Sealing ring according to one of Claims 1 to 3, **characterized in that** the second axial limb (9) is embedded in the first axial limb (1) and the stabilizing limb (10) is embedded in the sealing limb (2) .

5. Sealing ring according to one of Claims 1 to 4, **characterized in that** the spring (8) is arranged on the mutually facing sides (11, 12) of the first axial limb (1) and the sealing limb (2).

6. Sealing ring according to one of Claims 1 to 5, **characterized in that** the spring (8) consists of a spring steel.

7. Sealing ring according to one of Claims 1 to 6, **characterized in that** the first axial limb (1) and the sealing limb (2) are formed merging into one another in one piece and from one and the same material and consist of a sealing material.

8. Sealing ring according to one of Claims 1 to 7, **characterized in that** the first axial limb (1), the sealing limb (2) and the joint (4) are formed merging into one another in one piece and from one and the same material and consist of a sealing material.

9. Use of a sealing ring according to one of Claims 1 to 8 in tunnel boring machines or wind power plants.

## Revendications

1. Bague d'étanchéité, qui, vue en section transversale, est réalisée en forme de 7, comprenant une première branche axiale (1) et une branche d'étanchéité (2) avec une lèvre d'étanchéité (3), la branche d'étanchéité (2) étant connectée au moyen d'une articulation (4) à un premier côté frontal (5) de la branche axiale (1), et un élément de serrage (6) pour stabiliser la branche d'étanchéité (2) dans la direction radiale (7), l'élément de serrage (6) étant réalisé sous forme annulaire et, vu en section transversale, étant formé par un ressort (8) réalisé en forme de 7, et présentant une deuxième branche axiale (9) et une branche de stabilisation (10), la deuxième branche axiale (9) étant connectée à la première branche axiale (1) et la branche de stabilisation (10) étant connectée à la branche d'étanchéité (2), et la première branche axiale (1) présentant, sur son côté (11) tourné radialement vers la branche d'étanchéité (2), une contre-dépouille (13) qui s'étend dans la direction axiale (14) depuis un deuxième côté frontal (15) de la première branche axiale (1) dans la direction du premier côté frontal (5) et de l'articulation (4), **caractérisée en ce que** la deuxième branche axiale (9) est au moins essentiellement entourée par la première branche axiale (1) et la branche de stabilisation (10) est au moins essentiellement entourée par la branche d'étanchéité (2).

2. Bague d'étanchéité selon la revendication 1, **caractérisée en ce que** l'articulation (4), vue dans la direction radiale (7) et dans l'état de fabrication de la bague d'étanchéité, est disposée dans le tiers (16) de la bague d'étanchéité le plus éloigné de la lèvre d'étanchéité (3).

3. Bague d'étanchéité selon l'une quelconque des revendications 1 et 2, **caractérisée en ce que** la lèvre d'étanchéité (3) est disposée dans la direction radiale (7) à l'intérieur ou à l'extérieur de la bague d'étanchéité.

4. Bague d'étanchéité selon l'une quelconque des revendications 1 à 3, **caractérisée en ce que** la deuxième branche axiale (9) est intégrée dans la première branche axiale (1) et la branche de stabilisation (10) est intégrée dans la branche d'étanchéité (2).

5. Bague d'étanchéité selon l'une quelconque des revendications 1 à 4, **caractérisée en ce que** le ressort (8) est disposé sur les côtés (11, 12) de la première branche axiale (1) et de la branche d'étanchéité (2) tournés l'un vers l'autre.

6. Bague d'étanchéité selon l'une quelconque des revendications 1 à 5, **caractérisée en ce que** le ressort (8) se compose d'un acier à ressort.

7. Bague d'étanchéité selon l'une quelconque des revendications 1 à 6, **caractérisée en ce que** la première branche axiale (1) et la branche d'étanchéité (2) sont réalisées de manière à se prolonger d'une seule pièce l'une dans l'autre et sont en le même matériau et se composent d'un matériau d'étanchéité.

8. Bague d'étanchéité selon l'une quelconque des revendications 1 à 7, **caractérisée en ce que** la première branche axiale (1), la branche d'étanchéité (2) et l'articulation (4) sont réalisées de manière à se prolonger d'une seule pièce les unes dans les autres et sont en le même matériau et se composent d'un matériau d'étanchéité.

9. Utilisation d'une bague d'étanchéité selon l'une quelconque des revendications 1 à 8, dans des machines de percement de tunnels ou des éoliennes.
